# EUROPEAN PATENT APPLICATION

(11) **EP 4 693 146 A1**
(43) Date of publication of application: **11.02.2026**
(21) Application number: 24855115.2
(22) Date of filing: 24.06.2024
(51) Int. Cl.: G06Q 30/0241, G06F 18/20, G06N 20/00

(54) **OBJECT CLASSIFICATION METHOD AND APPARATUS, DEVICE, MEDIUM, AND PROGRAM PRODUCT**

(71) Applicant: Lemon Inc., Grand Cayman, KY1-1205 (KY)
(72) Inventor: CHEN, Xinxi, Los Angeles, California 90066 (US); WANG, Cong, Los Angeles, California 90066 (US); LIN, Weijian, Los Angeles, California 90066 (US)
(74) Representative: Marks & Clerk LLP
(86) International application number: PCT/SG2024/050415
(87) International publication number: WO 2026/005702

(57) **Abstract**

Embodiments of the present disclosure relate to methods, apparatus, devices, media, and program products for object classification. The method includes obtaining object data associated with the object whose delivery information does not exceed a predetermined duration, the object data indicating at least one of: a profile of the object, interactive information of the object, and attributes of information delivered by the object. The method also includes determining, based on the object data, a classification to which the object belongs, the classification being used to determine the processing policy associated with the object. According to embodiments of the present disclosure, the classifications of the objects to which information is to be delivered can be determined, and thus the corresponding processing strategies can be determined on the basis of these classifications. In this way, providing relevant and appropriate resources or strategies based on the classification of the object can improve the efficiency and experience of delivering information to the object.

## Description

### FIELD

Embodiments of the present disclosure generally relate to the field of computers, and more specifically, to a method and apparatus, device, medium and program product for object classification.

### BACKGROUND

With the popularization of the Internet and the increasing dependence of people on the Internet, there is more and more data on the Internet, which gradually forms massive data resources, and the processing and classification of these data becomes more and more important. With the increase of data resources, major platforms have emerged, which can provide various data resources to different users in different classifications. The platforms generally provide a service to push content such as text, video, and audio to users, as well as information about products, items, links, plugins, and so on.

### SUMMARY

Embodiments of the present disclosure provide a method and apparatus, a device, a medium and a program product for object classification.

In accordance with a first aspect of the present disclosure, there is provided a method for object classification. The method includes obtaining object data associated with the object for which delivery information does not exceed a predetermined duration, the object data indicating at least one of: a profile of the object, interactive information of the object, and attributes of information delivered by the object. The method also includes determining a classification to which the object belongs based on the object data, and the classification is used to determine the processing policy associated with the object.

In accordance with a second aspect of the present disclosure, there is provided an apparatus for object classification. The apparatus comprises an obtaining module configured to obtain object data associated with the object for which delivery information does not exceed a predetermined duration, the object data indicating at least one of: a profile of the object, interactive information of the object, and attributes of information delivered by the object. The apparatus further comprises a classifying module configured to determining a classification to which the object belongs based on the object data, and the classification is used to determine the processing policy associated with the object.

In accordance with a third aspect of the present disclosure, there is provided an electronic device. The electronic device comprises a processor and a memory coupled to the processor, the memory having stored therein instructions which, when executed by the processor, cause the electronic device to perform the method according to the first aspect.

In accordance with a fourth aspect of the present disclosure, there is provided a computer-readable storage medium storing computer executable instructions, wherein the computer executable instructions are executed by a processor to implement the method according to the first aspect.

In accordance with a fifth aspect of the present disclosure, there is provided a computer program product. The computer program product includes computer executable instructions, when the computer executable instructions are executed, cause a computer to implement the method according to the first aspect.

The invention content section is provided to introduce a selection of concepts in a simplified form that are further described below in the Detailed Description. The invention content section is not intended to identify key features or essential features of the claimed subject matter, nor is it intended to limit the scope of the claimed subject matter.

### BRIEF DESCRIPTION OF THE DRAWINGS

Combining with the accompanying drawings and referring to the following detailed description, the above and other objectives, features, and advantages of each embodiment will become more apparent. In the accompanying drawings, the same or similar reference numerals represent the same or similar elements, where:
FIG. 1 illustrates a schematic diagram of an example environment in which multiple embodiments of the present disclosure may be implemented;
FIG. 2 illustrates a flowchart of a method for object classification according to some embodiments of the present disclosure;
FIG. 3A illustrates a schematic diagram of a scenario for determining a classification to which an object belongs according to certain embodiments of the present disclosure;
FIG. 3B illustrates a schematic diagram of an architecture of a classification model according to certain embodiments of the present disclosure;
FIG. 4 illustrates a schematic diagram of a method for object classification according to certain embodiments of the present disclosure;
FIG. 5 illustrates a schematic diagram of a method for evaluating a classification model according to certain embodiments of the present disclosure;
FIG. 6 illustrates a block diagram of an apparatus for object classification in accordance with certain embodiments of the present disclosure; and
FIG. 7 illustrates a block diagram of an electronic device according to certain embodiments of the present disclosure.

In all figures, the same or similar reference numbers represent the same or similar elements.

### DETAILED DESCRIPTION OF EMBODIMENTS

It is to be understood that data involved in the technical solutions of the present disclosure, including but not limited to data per se, and acquisition or use of the data, should follow requirements of corresponding laws, regulations and rules. In response to receiving an active request from the users, a prompt message is sent to the users to clearly indicate the users that the operation to be executed by request needs to obtain and use their personal information. Therefore, the users may voluntarily select, in accordance with the prompt message, whether to provide their personal information to electronic devices, application programs, servers or storage media among other software or hardware executing operations included in the technical solutions of the present disclosure. The user interaction operations or interactions between users and content involved in this disclosure, as well as data related to user operations (including but not limited to data used for analysis, stored data, displayed data, etc.), are all recorded, collected or stored with user authorization or full authorization from all parties. The collection, use and processing of relevant data must comply with relevant laws, regulations and standards of relevant countries and regions, and provide corresponding operation entrances for users to choose authorization or refusal. In the technical solution of this disclosed embodiment, the collection, storage, use, processing, transmission, provision, and disclosure of user related information all comply with relevant laws and regulations and do not violate public order and good customs.

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It is to be understood that the drawings and the embodiments of the present disclosure are provided merely for the exemplary purpose, rather than restricting the protection scope of the present disclosure.

In the description of the embodiments of the present disclosure, the term "includes" and its variants are to be read as open-ended terms that mean "includes, but is not limited to." The term "based on" is to be read as "based at least in part on." The terms "one embodiment" and "this embodiment" are to be read as "at least one example embodiment." The terms "first", "second" and so on can refer to same or different objects. The following text also may include other explicit and implicit definitions.

As previously mentioned, some users can deliver information, which can be pushed to specific or non-specific groups of people. For ease of distinction and explanation, in embodiments of the present disclosure, an entity or user that deliveries information is referred to as an object of delivery information, and is simply referred to as the object. In related technologies, different resources and strategies can be provided for different objects based on their previous behaviors of the delivery information. In some cases, the object has less experience with the delivery information, and therefore lacks timeliness related information about the behavior of the object's previous delivery information. In this case, it is difficult to determine the processing policy associated with the object.

Therefore, the disclosed embodiments provide a method for object classification. In this method, for objects for which delivery information does not exceed the predetermined duration, object data associated with the object may be obtained. The object data may include at least one of the profile of the object, interaction information of the object, or attributes of the information delivered by the object. Based on the object data, the classification to which the object belongs may be determined, Thus, the information of the object can be processed based on its classification. Through the disclosed embodiments, objects may be accurately classified even when they have little or no experience in delivering information. Based on this classification, processing strategies associated with the objects can be determined, such as how to allocate resources to them. In this way, objects with less experience may also obtain appropriate resources and processing, thereby improving their experience. It can also make the processing of objects no longer limited to objects with rich experience, with higher flexibility and adaptability.

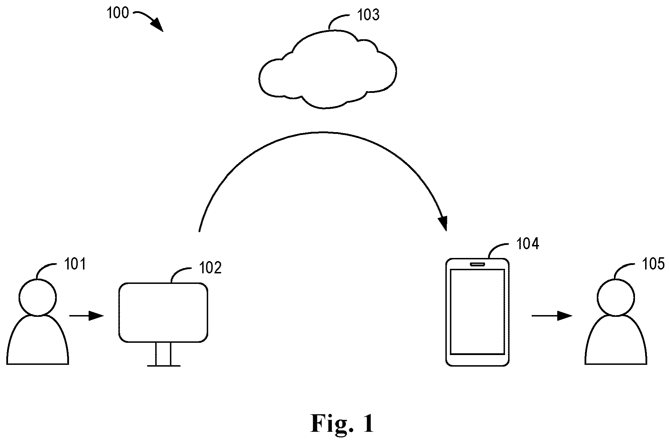

FIG. 1 illustrates a schematic diagram of an example environment 100 in which multiple embodiments of the disclosure may be implemented. As shown in FIG. 1, the example environment 100 can include an object 101 for delivering information, a terminal device 102, a cloud server 103, a terminal device 104, and a user 105. In the embodiments of the present disclosure, the terminal device can be any device capable of sending and receiving information, and can be a mobile phone, a tablet computer, a notebook computer, a palmtop computer, a smart television, a personal digital assistant (PDA), a smart printer, a smart home appliance, a vehicle-mounted terminal, a wearable device (a smart watch, a smart bracelet, smart glasses, etc.), a virtual reality (VR) device, an augmented reality (AR) device, etc. and the embodiments of the present application are not limited to this. End Equipment.

The cloud server 103 can be a computing system, a single server, a distributed server, etc. and the cloud server 103 can be a server providing a service for information delivery and push services, and can be used for providing a service for receiving and pushing content and information. Terminal device 102 and terminal device 104 may obtain services from a cloud server. In the embodiment of the present disclosure, the object 101 may deliver information via the terminal device 102, and the cloud server 103 can receive the information delivered by the object from the terminal device 102 and push same to the terminal device 104, so that the user 105 can obtain the information delivered by the terminal device 102 through the terminal device 104.

In some embodiments, the cloud server 103 may obtain object data associated with the object 101, determine the classification to which object 101 belongs based on this, and then the cloud server can determine the processing policy associated with object 101 based on this classification, such as determining resources allocated for information delivered by the object 101 or determining a communication policy with the object 101. It should be understood that the architecture and functionality in the example environment 100 are described for illustrative purposes only and do not imply any limitation on the scope of the present disclosure. Embodiments of the present disclosure may also be applied to other environments having different structures and/or functions. For example, in some embodiments, multiple objects may also be included in environment 100, and in some embodiments, terminal device 102 and terminal device 104 can communicate directly.

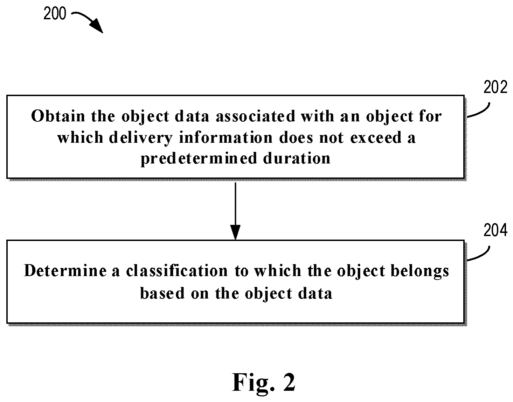

The method according to the embodiments of the disclosure is described in detail below in with reference to FIGS. 2- 5. For ease of understanding, the specific data mentioned in the description below are illustrative and are not intended to limit the scope of protection of the disclosure. It is understood that embodiments described below may also include additional actions not shown and/or can omit actions shown, and the scope of the disclosure is not limited in this respect.

FIG. 2 illustrates a flow diagram of a method 200 for object classification according to some embodiments of the present disclosure. The method 200 may be performed by an apparatus for object classification, such as the cloud server 103 in the environment 100, a system configured to the cloud server, or a stand-alone apparatus or system. The apparatus can be implemented by software and/or hardware. Next, taking the classification apparatus as the executing subject as an example, method 200 will be illustrated. Referring to FIG. 2, the method 200 can include block 202 and block 204.

At block 202, the classification apparatus obtains object data associated with an object for which delivery information does not exceed a predetermined duration. The delivery information not exceeding a predetermined duration may be the first time that the object recently deliveries information, that is to say, the object may be a user lacking the delivery information experience. In some embodiments, an object can be a new user that has not previously delivered information, such as a user who first logs into a delivery platform. In some embodiments, the object may be a user who has not delivered the information again more than another predetermined length of time after the previous delivery, i.e. an old user with little experience in delivering information.

The object data associated with the object may indicate at least one of a profile of the object, interactive information of the object, attributes of information delivered by the object. The profile can, for example, indicate the name, identification code of the object, etc. The interaction information may include, for example, the object's acquisition and click of other delivered or pushed information or content, and other interaction information. The information delivered by the object may be latest information delivered by the object, or information that the object was previously delivered. Attributes of information delivered by an object can include, for example, the type of delivered information, the quantity of delivered information, or other attributes of the information, etc. In some embodiments, the classification apparatus can obtain object data during use of the delivery platform, for example, obtaining data entered by the object during logging into the delivery platform.

At block 204, the classification apparatus determines the classification to which the object belongs based on the object data, and the classification is used to determine the processing policy associated with the object. In some embodiments, the classification apparatus can predefine multiple classifications, and the classification apparatus may determine the classification to which the object belongs. In some embodiments, a classification apparatus may determine the score of an object based on the object data and, based on that score, determine the classification to which the object belongs. In some embodiments, the classification apparatus may be configured with a predefined classification model, and the classification apparatus can input object data into the classification model to determine the classification to which the object belongs. In some embodiments, the classification apparatus may obtain object data associated with other objects and their classifications, and based on this, determine the classification to which the object belongs.

In embodiments of the disclosure, the processing policy associated with an object may be directly related to the object or related to the information delivered by the object. Illustratively, the processing policy associated with an object can be the manner of communication with the object, or the type or amount of resources allocated for the information delivered by the object.

Through the above method 200, the classification apparatus can determine the classification of objects with little experience in delivering information based on the object data associated with the objects, and can determine processing strategies for objects with little experience on this basis. In this way, even those who have little experience with the delivery information will be able to determine the appropriate processing policy for them. In this way, the flexibility and adaptability of providing resources and strategies for the object or the information delivered by the object can be improved, as well as the experience of the object.

In some embodiments, the object data associated with the object obtained at block 202 above includes data indicating three of a profile of the object, interactive information of the object, and attributes of information delivered by the object. That is to say, the object data used to determine the classification of an object includes multiple data. In some embodiments, credit data for the object may be included in the profile of the object, and in some embodiments, the credit data may indicate the number of violations or trustworthiness of the object. In some embodiments, the object data may also indicate the satisfaction of the object with respect to the provided services or allocated resources.

In some embodiments, the attributes of the information delivered by the object include both the quantity of information delivered by the object after the object starts delivering information and the total amount of information delivered by the object, and the total amount may be a score of the information based on the quality of the delivered information or the number of types of the delivered information. In some embodiments, the classification apparatus can determine the features of the object based on the profile of the object and the interactive information of the object. The classification apparatus can determine the features of the delivered information based on the attributes of the information delivered by the object. The classification apparatus may input the features of the object and the features of the delivered information into a predefined classification model to determine the classification to which the object belongs.

In some embodiments the classification apparatus can obtain a web page created by the object or a web page containing information of the object. The classification apparatus can identify one or more data related to the object from the web page by a predefined identification model, such as a natural language processing model, and determine the object data associated with the object on this basis.

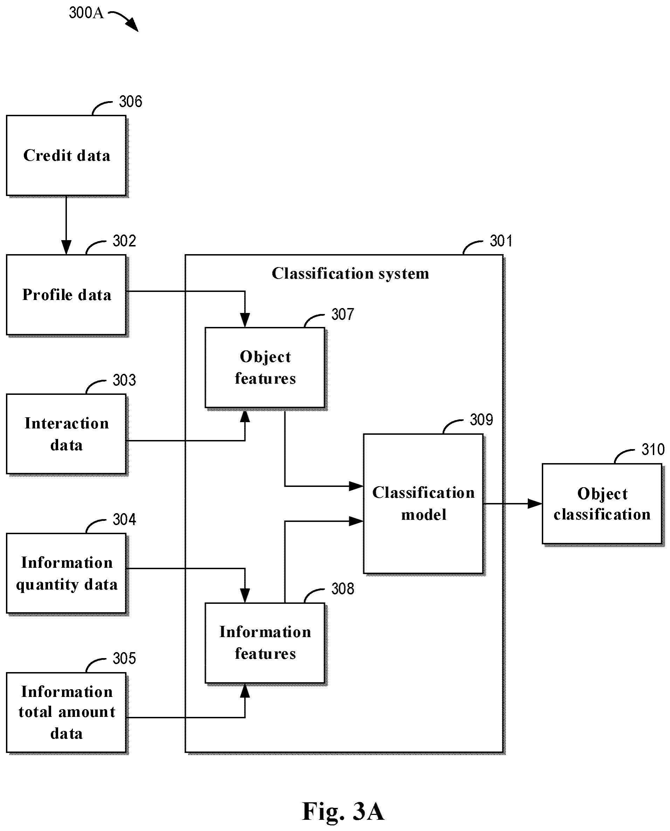

FIG. 3A illustrates a schematic diagram of a scenario 300A for determining a classification to which an object belongs, using a classification apparatus as an example of a classification system. In scenario 300A, a classification system 301 is included, which may obtain profile data 302 and interaction data 303 of the object, and generate object features 307 based on this. The profile data 302 may include object credit data 306. Classification system 301 may obtain information quantity data 304 and information total amount data 305 for information delivered by objects and generate information features 308 based on this. The classification system 301 can input object features 307 and information features 308 into a predefined classification model 309 to generate object classifications 310.

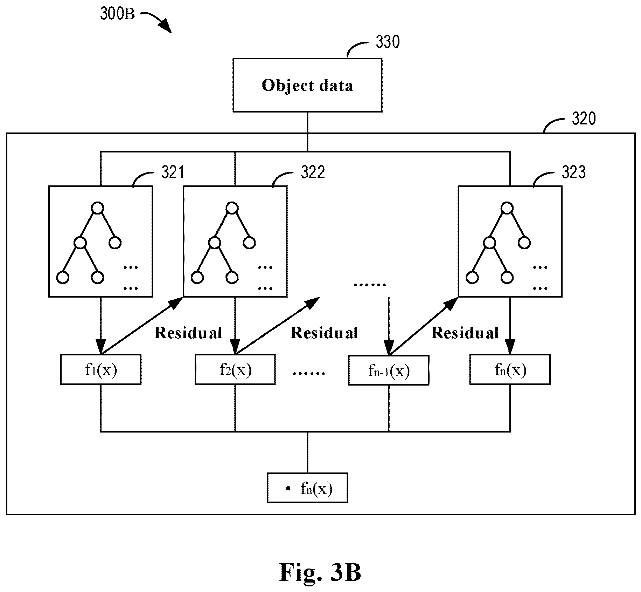

In some embodiments, the predefined classification model may be a classification model established based on the eXtreme Gradient Boosting (XGBoost) algorithm. FIG. 3B shows a schematic diagram of the architecture 300B of the XGBoost classification model in some embodiments of the present disclosure. The classification model 320 included in FIG. 3B can be, for example, the classification model 309 in FIG. 3A, and the object data 330 included in FIG. 3B can include, for example, the profile data 302, interaction data 303, information quantity data 304, and information total amount data 305 in FIG. 3A.

As shown in FIG. 3B, after receiving the object data 330, the classification model 320 may establish a decision tree 321 based on predefined rules. Through the decision tree 321, the score f₁(x) for classification may be obtained. Then, the classification model 320 may determine the residuals of the decision tree 321, and a new decision tree 322 is constructed based on the residual and object data 330. This process is repeated until the amount of decision trees reaches the predefined threshold, i.e. decision tree 323 is constructed, or the residual values no longer decrease. The classification model 320 may add the scores obtained from each decision tree for classification, thereby obtaining the score Σfₙ(x) for classifying objects. The classification system 301 may determine the classification to which the object belongs based on the predefined correspondence relationship based on the score Σfₙ(x).

It should be understood that FIGS. 3A-3B are only examples of embodiments of the present disclosure and are not intended to limit the methods provided by the present disclosure. In some embodiments, the classification system may obtain more or less data, and in some embodiments, the classification models can also be other types of classification models. In some embodiments, the classification apparatus can further input data indicating the profile of the object, the interaction information of the object, the quantity of information delivered by the object, the total amount of information delivered by the object into predefined classification models, respectively, which data form features, and the classification model determines the classification to which the object belongs based on these features.

In some embodiments, the classification model may be trained based on historical object data associated with the historical object, which includes data indicating the profile of the historical object, interaction information of the historical object, and attributes of the information delivered by the historical object, as well as data indicating the classification to which the historical object belongs. That is to say, the classification model can be trained based on data related to other objects that have already been manually or otherwise classified.

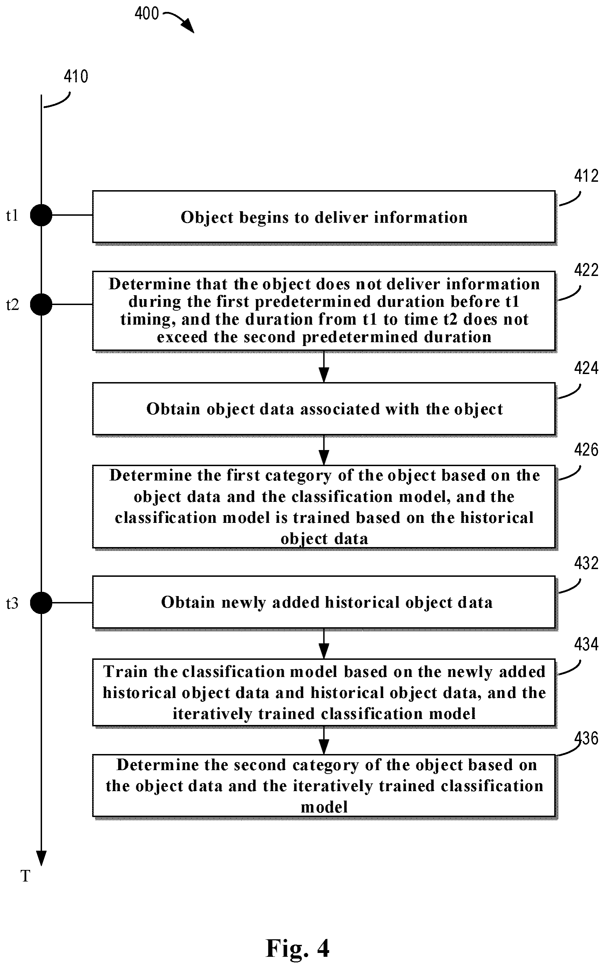

In some embodiments, the classification apparatus may continuously obtain newly added object data over time and train a classification model on this data, and update the classification of the object based on the continuously updated classification model. Illustratively, FIG. 4 illustrates a schematic diagram of a method 400 for object classification in some embodiments of the present disclosure in the form of a time axis. A time axis 410 is included in FIG. 4, the arrow on the time axis indicates the direction of time advance, which may illustratively include timing t1, t2, and t3. The timing t1 is a time before the timing t2, and the timing t2 is a time before the timing t3.

Referring to FIG. 4, method 400 may include blocks 412 to 436. The block 412 may occur at timing t1, blocks 422 to 426 may occur at timing t2, and blocks 432 to 436 may occur at timing t3. At block 412, at timing t1, the object begins to deliver information. The classification apparatus can obtain data related to the objects to determine that the object starts to deliver information at timing t1.

At block 422, at timing t2 after timing t1, the classification apparatus determines that no information has been delivered during the first predetermined duration before timing t1, and the duration from timing t1 to timing t2 does not exceed the second predetermined duration. That is to say, the classification apparatus determines that the object is a user without experience in delivering information or a user with little experience in delivering information. At block 424, the classification apparatus obtains object data associated with the object. At block 426, the classification apparatus determines the first classification to which the object belongs at timing t2 based on the object data and classification model, wherein the classification model is trained based on historical object data prior to timing t2.

At block 432, at timing t3 after timing t2, the classification apparatus obtains the new historical object data, which includes the new data associated with historical objects added between timing t2 and timing t3. At block 434, the classification apparatus trains the classification model based on historical object data and the new historical object data, thereby obtaining the iteratively trained classification model. At block 436, the classification apparatus determines the second classification to which the object belongs at timing t3 based on the object data associated with the object and the iteratively trained classification model. The second classification is more timeliness than the first classification.

Through the above method 400, the classification model can be continuously trained based on data that increases over time, so that the classification model can determine the classification of the object more accurately, so that the final classification of the object can become more accurate over time.

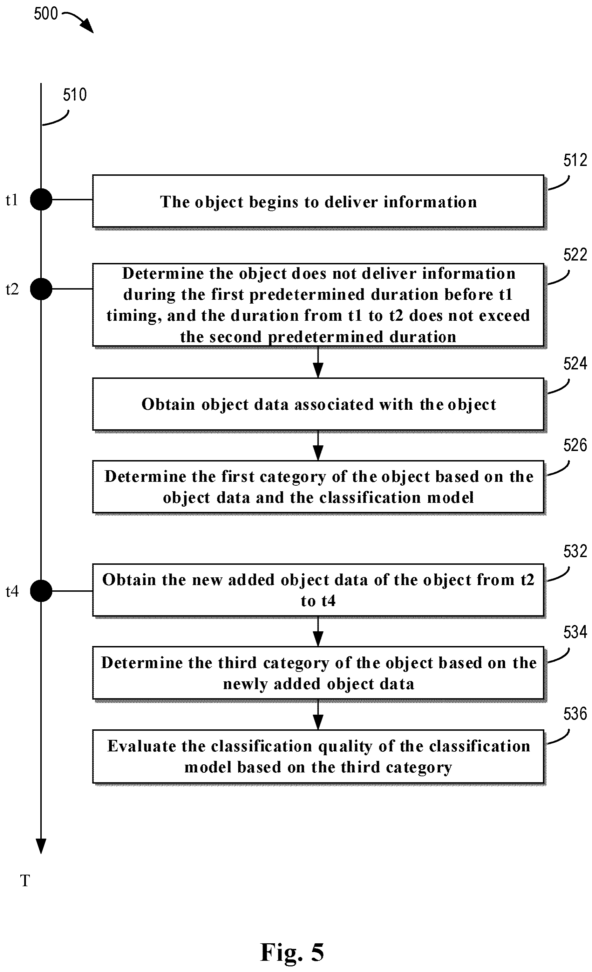

In some embodiments, the classification apparatus can also evaluate the classification effect of the classification model. For example, after the classification apparatus determines the classification to which the object belongs based on the classification model, the classification apparatus may evaluate the classification model based on newly added object data associated with the object. By way of example, FIG. 5 illustrates a schematic diagram of a method 500 for evaluating classification models in some embodiments of the present disclosure. Included in FIG. 5 is a time axis 510, the arrow on the time axis indicates the direction of time advance, which may illustratively include timing t1, t2, and t4. The timing t1 is a time before the timing t2, and the timing t2 is a time before the timing t4.

Referring to FIG. 5, method 500 can include blocks 512 to 536. Among them, block 512 can occur at timing t1, blocks 522 to 526 can occur at timing t2, and blocks 532 to 536 can occur at timing t4. At block 512, at timing t1, the object begins to deliver information. At block 522, at timing t2 after timing t1, the classification apparatus determines that the object has not delivered any information within the first predetermined duration before timing t1, and the duration from timing t1 to timing t2 does not exceed the second predetermined duration. That is, the classification apparatus determines that the object is a user without experience in delivering information or a user with little experience in delivering information. At block 524, the classification apparatus obtains object data associated with the object. At block 526, the classification apparatus determines the first classification to which the object belongs at timing t2 based on the object data and the first classification model.

At block 532, at timing t4 which is a third predetermined duration after timing t2 and is separated from timing t2, the classification apparatus obtains the newly added object data associated with the object from timing t2 to timing t4, and the newly added object data can include a third classification to which the object belongs. The third classification may be determined by a classification algorithm or autonomously configured as the quantity of information delivered by the object increases. At block 534, the classification apparatus determines a third classification to which the object belongs based on the new added object data. The third classification may be carried in the newly added object data. At block 536, the classification apparatus compares the third classification with the first classification determined based on the classification model at timing t2 to evaluate the classification effect of the classification model. For example, the classification apparatus can score the classification model based on the size of the gap between the third classification and the first classification. In some embodiments, when it is determined that the score of the classification model is below a predetermined score threshold, the classification apparatus may optimize the classification model such that better classification results are maintained at all times.

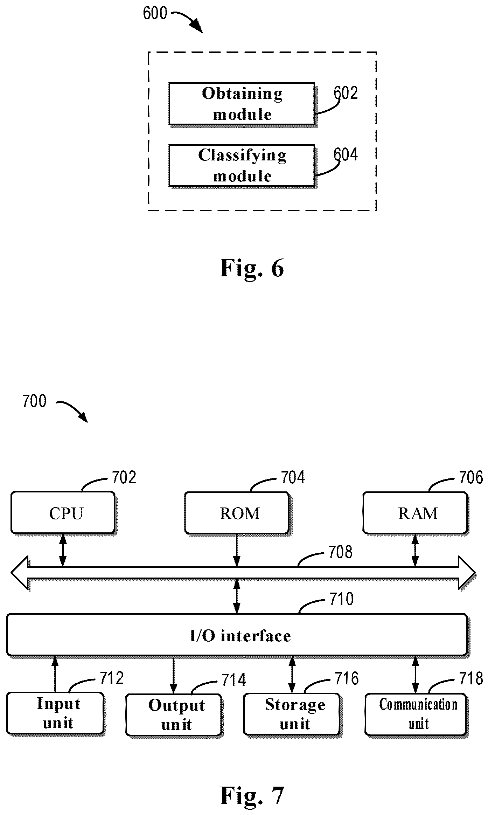

FIG. 6 illustrates a block diagram of an apparatus 600 for object classification according to some embodiments of the present disclosure. As shown in FIG. 6, the apparatus 600 may include an obtaining module 602 configured to obtain object data associated with an object for which delivery information does not exceed a predetermined duration, wherein the object data indicates at least one of: A profile of the object, interactive information of the object, and attributes of information delivered by the object. The device 600 can also include a classifying module 604 configured to determine, based on the object data, a classification to which the object belongs, and the classification is used to determine the processing policy associated with the object.

In some embodiments, the object data indicates the profile of the object, the interaction information of the object, and the attributes of the information delivered by the object, and the attributes of the information delivered by the object include the quantity of information and total amount of information.

In some embodiments, the profile of an object includes the credit data of the object.

In some embodiments, the classifying module 604 includes a model classification unit configured to determine the classification to which an object belongs based on object data and a classification model, wherein the classification model is trained based on historical object data associated with the historical object, and the historical object data includes data indicating the classification to which the historical object belongs.

In some embodiments, the model classification unit comprises: a first classification unit configured to determine the first classification to which the object belongs at the first timing based on the object data and the classification model; and a second classification unit configured to determine the second classification to which the object belongs at the second timing based on the object data and the iteratively trained classification model, wherein the iteratively trained classification model is a classification model trained on historical object data and the newly added historical object data, and the newly added historical object data is data associated with historical objects added between the first timing and second timing.

In some embodiments, the model classification unit includes a third classification unit configured to determine the first classification to which the object belongs at the first timing based on the object data and the classification model; and the device 600 also includes: a new data obtaining unit configured to obtain newly added object data of objects from the first timing to the third timing, with a third predetermined duration between the third timing and the first timing; and a fourth classification unit configured to determine the third classification to which the object belongs at the third timing based on the newly added object data, and the third classification is used to evaluate the classification model.

In some embodiments, the classification model includes an extreme gradient boosting model.

In some embodiments, the obtaining module 602 includes a webpage obtaining unit configured to obtain webpages associated with objects; And a data determination unit configured to determine at least a part of object data from a webpage based on a predefined recognition model.

FIG. 7 shows a block diagram of an electronic device 700 according to certain embodiments of the present disclosure, which can be the device or apparatus described in the embodiments of the present disclosure. As shown in FIG. 7, device 700 includes a central processing unit (CPU) and/or graphics processing unit (GPU) 702, which can be used according to computer program instructions stored in read-only memory (ROM) 704 or computer program instructions loaded from storage unit 716 to random access memory (RAM) 706. To perform various appropriate actions and processing. In RAM 706, it is also possible to store various programs and data required for the operation of the device 700. The CPU/GPU 702, ROM 704, and RAM 706 are connected to each other via bus 708. The input/output (I/O) interface 710 is also connected to bus 708. Although not shown in FIG. 7, the device 700 May also include a coprocessor.

Multiple components in device 700 are connected to I/O interface 710, including input unit 712 such as keyboard, mouse, etc.; output unit 714, such as various types of displays, speakers, etc.; storage unit 716, such as disks, CDs, etc.; and communication unit 718, such as network card, modem, wireless communication transceiver, etc. The communication unit 718 allows the device 700 to exchange information/data with other devices via a computer network such as the internet and/or various telecommunication networks.

The various methods or processes described above can be executed by CPU/GPU 702. For example, in some embodiments, the method may be implemented as a computer software program tangibly contained in a machine-readable medium, such as storage unit 716. In some embodiments, some or all of the computer program may be loaded and/or installed onto device 700 via ROM 704 and/or communication unit 718. When a computer program is loaded into RAM 706 and executed by CPU/GPU 702, one or more steps or actions of the methods or processes described above can be performed.

In some embodiments, the methods and processes described above can be implemented as computer program products. A computer program product can include a computer-readable storage medium containing computer-readable program instructions for executing various aspects of the present disclosure.

Computer readable storage media can be tangible devices that can hold and store instructions used by instruction executing devices. Computer readable storage media can include, but are not limited to, electrical storage devices, magnetic storage devices, optical storage devices, electromagnetic storage devices, semiconductor storage devices, or any suitable combination thereof. More specific examples (non-exhaustive list) of computer-readable storage media include: portable computer disks, hard disks, random access memory (RAM), read-only memory (ROM), erasable programmable read-only memory (EPROM or flash memory), static random access memory (SRAM), portable compact disc read-only memory (CD-ROM), digital versatile disks (DVD), memory sticks, floppy disks, mechanical encoding devices, such as punch cards or recessed structures with instructions stored on them, and any suitable combination of the above. The computer-readable storage medium used here is not interpreted as an instantaneous signal itself, such as radio waves or other freely propagating electromagnetic waves, electromagnetic waves propagated through waveguides or other transmission media (e.g. optical pulses through fiber optic cables), or electrical signals transmitted through wires.

The computer-readable program instructions described herein may be downloaded from a computer-readable storage medium to various computing/processing devices, or to an external computer or external storage device through a network, such as the Internet, a local area network, a wide area network, and/or a wireless network. The network can include copper transmission cables, fiber optic transmission, wireless transmission, routers, firewalls, switches, gateway computers, and/or edge servers. The network adapter card or network interface in each computing/processing device receives computer-readable program instructions from the network and forwards the computer-readable program instructions for storage on computer-readable storage media in each computing/processing device.

The computer program instructions used to perform the disclosed operations may be assembly instructions, instruction set architecture (ISA) instructions, machine instructions, machine related instructions, microcode, firmware instructions, state setting data, or source or object code written in any combination of one or more programming languages, including object-oriented programming languages and conventional procedural programming languages. Computer readable program instructions can be executed entirely on the user's computer, partially on the user's computer, as a standalone software package, partially on the user's computer, partially on a remote computer, or entirely on a remote computer or server. In the case of a remote computer, the remote computer can connect to the user computer through any kind of network, including a local area network (LAN) or a wide area network (WAN), or it can connect to an external computer (for example, using an Internet service provider to connect through the Internet). In some embodiments, customized electronic circuits, such as programmable logic circuits, field programmable gate arrays (FPGAs), or programmable logic arrays (PLAs), can execute computer-readable program instructions to achieve various aspects of the present disclosure by utilizing state information of computer-readable program instructions.

These computer-readable program instructions can be provided to the processing units of general-purpose computers, specialized computers, or other programmable data processing devices, thereby producing a machine that, when executed by the processing units of the computer or other programmable data processing devices, produces a device that implements the functions/actions specified in one or more blocks of the flowchart and/or block diagram. These computer-readable program instructions can also be stored in computer-readable storage media, which enable the computer, programmable data processing device, and/or other equipment to operate in a specific manner. Therefore, the computer-readable medium storing the instructions includes a product that includes instructions for implementing various aspects of the functions/actions specified in one or more blocks of the flowchart and/or block diagram.

Computer readable program instructions can also be loaded onto a computer, other programmable data processing device, or other equipment to perform a series of operational steps on the computer, other programmable data processing device, or other equipment to generate a computer implemented process, thereby enabling the instructions executed on the computer, other programmable data processing device, or other equipment to implement the functions/actions specified in one or more blocks of the flowchart and/or block diagram.

The flowchart and block diagram in the attached figure show the possible implementation architecture, functions, and operations of the device, method, and computer program product according to multiple embodiments of the present disclosure. In this regard, each block in a flowchart or block diagram can represent a module, program segment, or part of an instruction that includes one or more executable instructions for implementing specified logical functions. In some alternative implementations, the functions marked in the block can also occur in a different order than those marked in the figure. For example, two consecutive blocks can actually be executed essentially in parallel, and sometimes they can also be executed in reverse order, depending on the functionality involved. It should also be noted that each block in the block diagram and/or flowchart, as well as combinations of blocks in the block diagram and/or flowchart, can be implemented using dedicated hardware based systems that perform specified functions or actions, or can be implemented using a combination of dedicated hardware and computer instructions.

The above has described various embodiments of the present disclosure, and the above description is exemplary, not exhaustive, and not limited to the disclosed embodiments. Without deviating from the scope and spirit of the various embodiments described, many modifications and changes are obvious to those skilled in the art. The terms used herein are chosen to best explain the principle, practical application or technical improvement of the technology in the market or to make the embodiments disclosed herein understandable to other ordinary persons of skill in the art.

## Claims

1. A method for object classification, comprising:
obtaining object data associated with an object for which delivery information does not exceed a predetermined duration, wherein the object data indicates at least one of: a profile of the object, interactive information of the object, attributes of information delivered by the object; and
determining a classification to which the object belongs based on the object data, and the classification is used to determine the processing policy associated with the object.

2. The method according to claim 1, wherein the object data indicates the profile of the object, the interactive information of the object, and the attributes of the information delivered by the object, and the attributes of the information delivered by the object include a quantity of the information and a total amount of the information.

3. The method according to claim 2, wherein the profile of the object comprises credit data of the object.

4. The method according to claim 1, wherein determining the classification to which the object belongs based on the object data comprises:
determining the classification to which the object belongs based on the object data and classification model, wherein the classification model is trained based on historical object data associated with a historical object, and the historical object data includes data indicating the classification to which the historical object belongs.

5. The method according to claim 4, wherein determining the classification to which the object belongs based on the object data and the classification model comprises:
determining a first classification to which the object belongs at a first timing based on the object data and the classification model; and
determining a second classification to which the object belongs at second timing based on the object data and an iteratively trained classification model, the iteratively trained classification model is the classification model trained with newly added historical object data and the historical object data, and the newly added historical object data is data associated with historical objects added between the first timing and the second timing.

6. The method according to claim 4, wherein determining the classification to which the object belongs based on the object data and the classification model comprises:
determining the first classification to which the object belongs at the first timing based on the object data and the classification model;
the method further comprises:
obtaining newly added object data of the object from the first timing to a third timing, wherein the third timing is separated from the first timing by a third predetermined duration; and
determining the third classification to which the object belongs at the third timing based on the newly added object data, and the third classification is used to evaluate the classification model.

7. The method according to any of claims 4-6, wherein the classification model comprises an extreme gradient boosting model.

8. The method according to claim 1, wherein obtaining object data associated with the object comprises:
obtaining a web page associated with the object; and
determining at least a part of the object data from the webpage based on a predefined recognition model.

9. An apparatus for object classification, comprising:
an obtaining module configured to obtain object data associated with objects whose delivery information does not exceed a predetermined duration, wherein the object data indicates at least one of: the profile of the object, the interaction information of the object, and the attributes of the information delivered by the object; and
a classifying module configured to determine the classification to which the object belongs based on the object data, and the classification is used to determine the processing policy associated with the object.

10. An electronic device comprising:
processor; and
a memory coupled to the processor, the memory having instructions stored therein that, when executed by the processor, cause the electronic device to perform the method according to any of claims 1-8.

11. A computer-readable storage medium storing computer executable instructions, wherein the computer executable instructions are executed by a processor to perform the method according to any of claims 1 to 8.

12. A computer program product comprising computer executable instructions which, when executed by computer, cause a computer to perform the steps of the method according to any of claims 1-8.
